# EUROPEAN PATENT APPLICATION

(11) **EP 2 922 189 A2**
(43) Date of publication of application: **23.09.2015**
(21) Application number: 14004156.7
(22) Date of filing: 10.12.2014
(51) Int. Cl.: H02K 41/03

(54) **Linear magnetic power generator**

(30) Priority: 31.12.2013 IT MI20130425
(71) Applicant: Fast Man Service Srl, 20010 Bareggio (MI) (IT)
(72) Inventor: Sorice, Dario, 20018 Sedriano (MI) (IT)

(57) **Abstract**

The system G.P.M.L. (Linear Magnetic Power Generator) allows, through the repetition of the passage of the carriages in the straight sections (where the element "A" will be set on trolleys which composes the ring of the sorter, and the element "B " will be mounted along the passage ways of the rectilinear Sorter), to be able to recover part of the energy used for moving the individual carriages that make up the different Sorter. This energy can be used to activate the on-board units electrical (electric motors , energy accumulators etc.), without having contact elements for the transfer of the same or without transferring energy as Valhe in systems that use sliding contacts or with systems Induction of electricity.

## Description

The GPML , is derived from the development of two existing systems , called " Magnet Linear Motors and Generators Magnetic Rotary ."

The study and application of these concepts , mentioned above , have led to the development of the product defined GPML, below we give a description of the operation :
The product GPML, consists of two distinct elements , referred to as " A" and " B " as shown in Fig . 1

The element "A" is composed of a central linear strip of iron -colored Pink and electric winding of a particular color Yellow, which wraps up in the spiral direction 24 teeth (teeth may be smaller or greater than 24) of the element' A' defined comb.

The element " B " is composed of a central body called linear plane magnetic carrier in ferrous material of Green color and an infinite series of permanent magnets polarized " +" and " - " Red and Blue color.

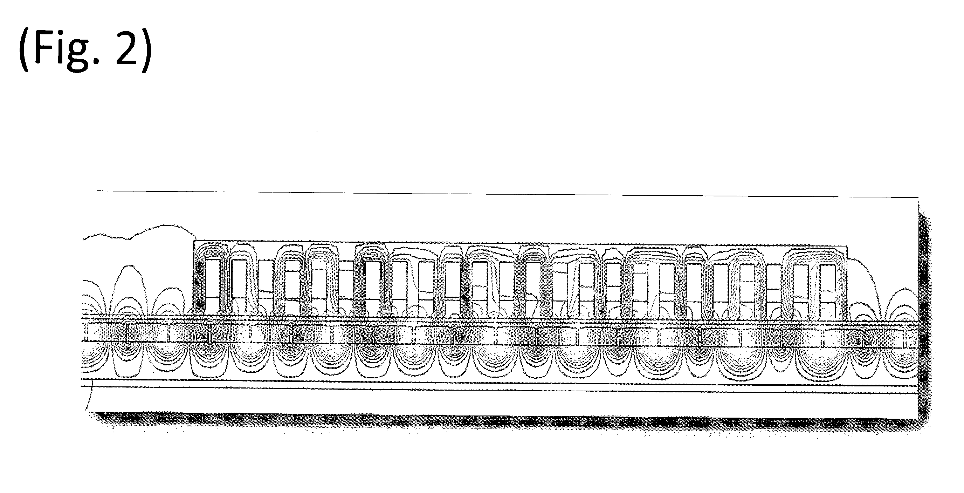

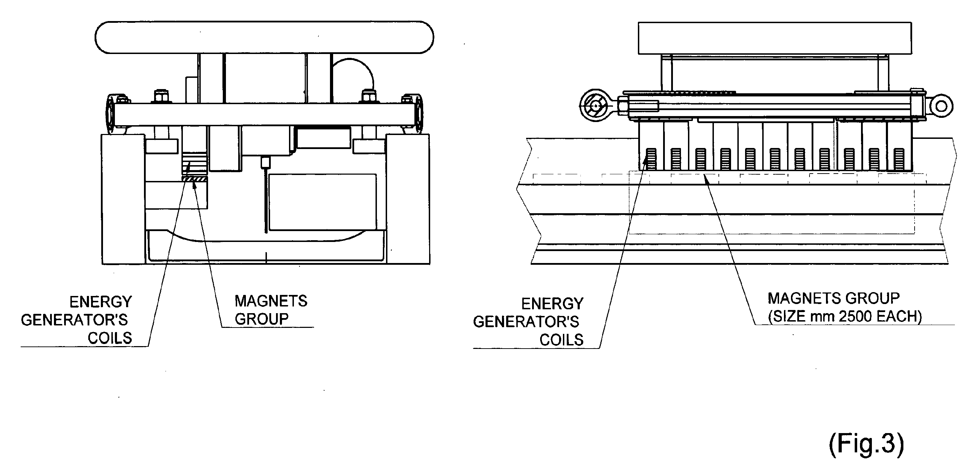

When the element "A" along its entire length for the element " B " , is obtained by a generation of electromagnetic energy clean , see fig.2 .

The G.P.M.L. generates energy by exploiting the concept of magnetic variation induced in the windings of an electromagnet. This variation of magnetic flux is obtained by translating at close range two shares mechanical one of which contains the permanent magnets and the other containing the series of inductors to the heads of which produce electrical energy by induction .

Unlike systems that generate energy from the rotating apparatus called " alternators " , the GPML generates electricity using the linear translational motion present in the multitude of machines used in the electromechanical industry.

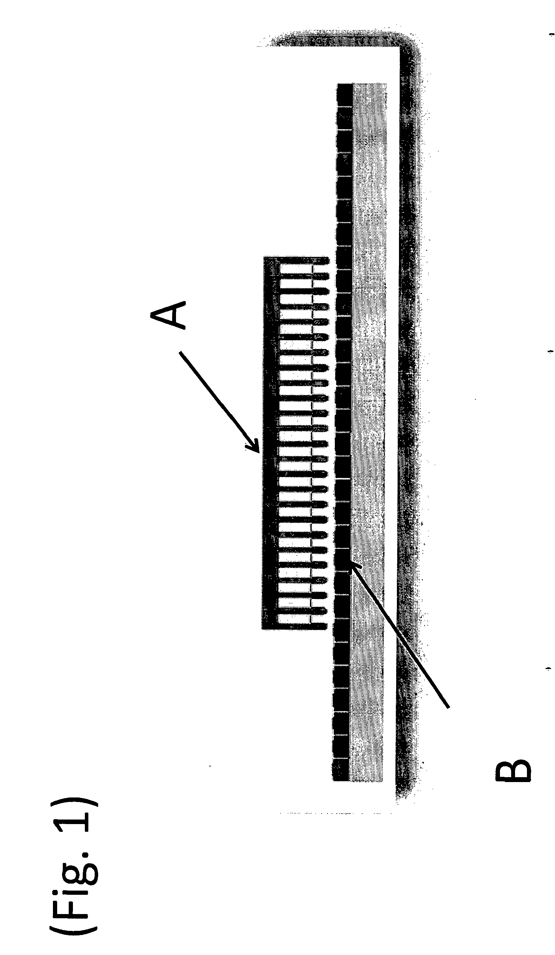

The magnitude of the energy generated is closely related to the physical form of the two movable mechanical parts interfaced and in particular is a function of the amount of magnetic flux. In this regard, particular importance covers the distance of the air gap between the inductors and the magnets A B reported in fig.1 .

The table below shows the voltage values obtained from the output inductors (part A of Figure 1) as a function of the distance of the air gap with the mechanical element B containing the permanent.

| **Gap [mm]** | **Max Value [V]** | **Mean Value [V]** | **rms Value [V]** | **Kf^{*}** |
|---|---|---|---|---|
| **1** | 111.7 | 70.1 | 78.8 | 1.124 |
| **2** | 88.4 | 55.7 | 62.3 | 1.118 |
| **3** | 69.2 | 43.7 | 48.9 | 1.119 |
| **4** | 54.5 | 34.5 | 38.5 | 1.116 |
| **5** | 43.1 | 27.8 | 30.5 | 1.097 |
| **6** | 34.1 | 21.6 | 24.1 | 1.116 |

The GPML can be applied but not limited to all those machines that have parts interfaced at close range in continuous translational motion as it is defined in the Logistics Systems Cross Belt Sorter, Sorter to Tray Sorter or Linear. In these systems there is the need to transfer the energy to the edge of the moving parts and , in the current state of the art , is to use sliding contacts or traditional systems of electromagnetic induction or cable systems containing rotating alternators.

The advantage introduced by the present invention GPML consists in the possibility to transfer energy on the moving parts with a high degree of efficiency and low maintenance without the need to modify the structures of the above-mentioned logistic systems already in work.

The G.P.M.L. can therefore be used with considerable benefits in terms of cost and simplicity of installation / maintenance in both rails of new construction is already operating in the apparatus where it is necessary to introduce improvements in terms of energy recovery to be made on the moving parts.

## Claims

1. The G.P.M.L. generates energy by exploiting the concept of magnetic variation induced in the windings of an electromagnet. This variation of magnetic flux is obtained by translating at close range two shares mechanical one of which contains the permanent magnets and the other containing the series of inductors to the heads of which produce electrical energy by induction ;

2. Unlike systems that generate energy from the rotating apparatus called " alternators ", the GPML generates electricity using the linear translational motion present in the multitude of machines used in the electromechanical industry;

3. The extent of the energy generated is closely related to the physical form of the two movable mechanical parts interfaced and in particular is a function of the amount of magnetic flux. In this regard, particular importance covers the distance of the air gap between the inductors and the magnets A B shown in Fig.1.;

4. The system of windings used in GPML.
